# EUROPÄISCHE PATENTSCHRIFT

(11) **EP 2 864 404 B1**
(45) Veröffentlichungstag und Bekanntmachung des Hinweises auf die Patenterteilung: **05.04.2017**
(21) Anmeldenummer: 13730885.4
(22) Anmeldetag: 21.06.2013
(51) Int. Cl.: C08K 3/22, C08K 3/32, C08K 5/49, C08L 75/04

(54) **FLAMMGESCHÜTZTES THERMOPLASTISCHES POLYURETHAN AUF DER BASIS VON POLYCARBONATDIOLEN**
FIRE-RESISTANT THERMOPLASTIC POLYURETHANE BASED ON POLYCARBONATE DIOLS
POLYURÉTHANE THERMOPLASTIQUE IGNIFUGE À BASE DE DIOLÈNE DE POLYCARBONATE

(30) Priorität: 22.06.2012 EP 12173273
(43) Veröffentlichungstag der Anmeldung: 29.04.2015
(73) Patentinhaber: BASF SE, 67056 Ludwigshafen am Rhein (DE)
(72) Erfinder: HENZE, Oliver Steffen, 49448 Lemförde (DE); MÜHREN, Oliver, 49565 Bramsche (DE); BERTELS, Alfons, 49356 Diepholz (DE); MÖLLER, Sabine, 32351 Stemwede/Oppenwehe (DE)
(86) Internationale Anmeldenummer: PCT/EP2013/063058
(87) Internationale Veröffentlichungsnummer: WO 2013/190118

(56) Entgegenhaltungen:
- EP-A1- 1 491 580
- WO-A1-2007/043945
- WO-A1-2011/050520

## Beschreibung

Die vorliegende Erfindung betrifft Zusammensetzungen enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polycarbonatdiol basierendes thermoplastisches Polyurethan ist. Weiter betrifft die vorliegende Erfindung die Verwendung derartiger Zusammensetzungen zur Herstellung von Kabelummantelungen.

Flammgeschützte thermoplastische Polyurethane sind seit langem bekannt. Für viele Anwendungen ist die Zugabe von Flammschutzmitteln notwendig. Dabei können den thermoplastischen Polyurethanen (TPU) sowohl halogenhaltige als auch halogenfreie Flammschutzmittel beigemischt werden. Die halogenfrei flammgeschützten thermoplastischen Polyurethane haben dabei in der Regel den Vorteil, dass sie beim Abbrennen weniger toxische und weniger korrosive Rauchgase entwickeln. Halogenfreie flammgeschützten TPU sind beispielsweise beschrieben in EP 0 617 079 A2, WO 2006/121549 A1 oder WO 03/066723 A2.

Zum halogenfreien Flammschutz von thermoplastischen Polyurethanen können stickstoffhaltige und/oder phosphorhaltige Flammschutzmittel verwendet werden, die beispielsweise in EP 0 617 079 A2, WO 2006/121549 A1 oder WO 03/066723 A2 offenbart werden. In WO 2006/121549 A1 werden beispielsweise flammgeschützte thermoplastische Polyurethane offenbart, die als Flammschutzmittel Phosphorverbindungen enthalten. Als geeignete thermoplastische Polyurethane werden auch solche genannt, die unter Verwendung von Polyestern, Polyethern, Polycarbonaten oder Mischungen davon hergestellt werden. Geeignete Polycarbonate werden ebenfalls offenbart. Die alleinige Verwendung von phosphorhaltigen Flammschutzmitteln kann häufig keinen ausreichenden Flammschutz gewährleisten. Die Verwendung von stickstoffhaltigen Flammschutzmitteln allein oder in Kombination mit phosphorhaltigen Flammschutzmitteln dagegen gibt ausweislich des Stands der Technik gut flammgeschützte thermoplastische Polyurethane, hat aber auch den Nachteil, dass durch die stickstoffhaltigen Verbindungen auch giftige Brandgase wie HCN oder Stickoxide freigesetzt werden können.

WO 2007/043945 A1 betrifft Polyurethan Elastomere auf Basis von Polycarbonaten. Spezielle Kombinationen von Flammschutzmitteln werden in der WO 2007/043945 A1 nicht offenbart.

Zum halogenfreien Flammschutz von thermoplastischen Polyurethanen können auch Metallhydroxide allein oder in Kombination mit phosphorhaltigen Flammschutzmitteln und/oder Schichtsilikaten eingesetzt werden.

Auch EP 1 167 429 A1 betrifft flammgeschützte thermoplastische Polyurethane für Kabelmäntel. Die Zusammensetzungen enthalten ein Polyurethan, bevorzugt ein Polyether basiertes Polyurethan, Aluminium- oder Magnesium-Hydroxid und Phosphorsäureester.

Auch EP 1 491 580 A1 offenbart flammgeschützte thermoplastische Polyurethane für Kabelmäntel. Die Zusammensetzungen enthalten ein Polyurethan, insbesondere einen Polyether, Aluminium- oder Magnesium-Hydroxid, Phosphorsäureester sowie Schichtsilikate, beispielsweise Bentonit.

In EP 2 374 843 A1 werden beispielsweise flammgeschützte thermoplastische Polyurethane insbesondere auf Basis von Polyethern für Kabelmäntel mit guter Alterungsbeständigkeit offenbart. Die Zusammensetzungen enthalten ein Polyurethan und ein anorganisches Oxid. Als Flammschutzmittel sind Aluminium- oder Magnesium-Hydroxid, Phosphorsäureester, Schichtsilikate oder Mischungen davon genannt.

DE 103 43 121 A1 offenbart flammgeschützte thermoplastische Polyurethane, die ein Metallhydroxid enthalten, insbesondere Aluminium- und/oder Magnesium-Hydroxid. Die thermoplastischen Polyurethane sind durch ihr Molekulargewicht charakterisiert. Die Zusammensetzungen können weiter Phosphate oder Phosphonate enthalten. Bezüglich der Ausgangsstoffe für die Synthese der thermoplastischen Polyurethane werden als gegenüber Isocyanaten reaktive Verbindungen neben Polyesterolen und Polyetherolen auch Polycarbonatdiole offenbart, wobei Polyetherpolyole bevorzugt sind. Es werden keine Beispiele für Polycarbonatdiole genannt. Gemäß DE 103 43 121 A1 können statt eines Polyols auch Mischungen verschiedener Polyole eingesetzt werden. Darüber hinaus werden hohe Füllgrade offenbart, d.h. hohe Anteile an Metallhydroxiden und weiteren festen Komponenten im thermoplastischen Polyurethan, die zur Verschlechterung der mechanischen Eigenschaften führen.

Auch in WO 2011/050520 A1 werden flammgeschützte thermoplastische Polyurethane offenbart, die ein Metallhydrat und eine spezielle Phosphorverbindung als Flammschutzmittel enthalten. Als geeignete Metallhydrate werden Aluminium- und/oder Magnesium-Hydroxid genannt. Als geeignete thermoplastische Polyurethane werden in WO 2011/050520 A1 auch auf Polycarbonaten basierende thermoplastische Polyurethane erwähnt, wobei die auf Polycarbonatdiolen basierenden thermoplastischen Polyurethane nur generell erwähnt werden und keine Beispiele genannt werden. Ebenso betreffen WO 2011/147068 A1 und WO 2011/150567 A1 flammgeschützte thermoplastische Polyurethane.

Ein Nachteil von Mischungen basierend auf thermoplastischen Polyurethanen in Kombination mit Metallhydroxiden ist eine geringe Alterungsbeständigkeit, die diese Materialen für viele Einsatzgebiete ungeeignet erscheinen läßt. Um die Alterungsbeständigkeit zu verbessern, werden beispielsweise gemäß EP 2 374 843 A1 schwer lösliche Oxide von zwei- und dreiwertigen Metallen zugesetzt.

Ausgehend vom Stand der Technik lag der vorliegenden Erfindung demgemäß die Aufgabe zugrunde, flammgeschützte thermoplastische Polyurethane bereitzustellen, die gute mechanische Eigenschaften aufweisen, gute Flammschutzeigenschaften zeigen, und die gleichzeitig eine gute Hydrolysebeständigkeit und Alterungsbeständigkeit aufweisen.

Erfindungsgemäß wird diese Aufgabe gelöst durch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polycarbonatdiol basierendes thermoplastisches Polyurethan ist, wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole.

Die erfindungsgemäßen Zusammensetzungen enthalten mindestens ein thermoplastisches Polyurethan, das auf mindestens einem Diisocyanat und mindestens einem Polycarbonatdiol basiert, sowie mindestens ein Metallhydroxid und mindestens ein phosphorhaltiges Flammschutzmittel. Es wurde überraschend gefunden, dass die erfindungsgemäßen Zusammensetzungen gegenüber den aus dem Stand der Technik bekannten Zusammensetzungen verbesserte Eigenschaften aufweisen, beispielsweise eine erhöhte Flammwidrigkeit und eine verbesserte Alterungsbeständigkeit. Darüber hinaus weisen die erfindungsgemäßen Zusammensetzungen gute Eigenschaften in Bezug auf die Rauchgasdichten auf sowie gute mechanische Eigenschaften. Ein Maß für die mechanischen Eigenschaften ist beispielsweise die Zugfestigkeit oder die Bruchdehnung der aus den erfindungsgemäßen Zusammensetzungen hergestellten Formkörper vor Alterung. Die Zugfestigkeit wird bestimmt gemäß DIN 53504.

Die erfindungsgemäßen Zusammensetzungen enthalten mindestens ein thermoplastisches Polyurethan, das auf mindestens einem Diisocyanat und mindestens einem Polycarbonatdiol basiert, weisen darüber hinaus eine sehr gute Hydrolysebeständigkeit auf, die für viele Anwendungen erforderlich ist.

Die erfindungsgemäßen Zusammensetzungen enthalten mindestens ein thermoplastisches Polyurethan, das auf mindestens einem Diisocyanat und mindestens einem Polycarbonatdiol basiert, wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole.

Neben dem mindestens einem auf mindestens einem Diisocyanat und mindestens einem Polycarbonatdiol basierenden thermoplastischen Polyurethan, dem mindestens einen Metallhydroxid und mindestens einen phosphorhaltigen Flammschutzmittel kann die erfindungsgemäße Zusammensetzung weitere Zusatzstoffe enthalten.

Gemäß einer bevorzugten Ausführungsform enthält die erfindungsgemäße Zusammensetzung als weitere Komponente mindestens ein Schichtsilikat oder Hydrotalkit oder Mischungen davon. Die erfindungsgemäß bevorzugten Zusammensetzungen enthaltend mindestens ein Schichtsilikat oder Hydrotalkit oder Mischungen davon weisen insbesondere gute Flammschutzeigenschaften und eine gute Alterungsbeständigkeit auf.

Demgemäß betrifft die vorliegende Erfindung gemäß einer bevorzugten Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei die Zusammensetzung mindestens ein Schichtsilikat oder Hydrotalkit oder Mischungen davon enthält.

### Schichtsilikate/Hydrotalkit

Grundsätzlich sind im Rahmen der vorliegenden Erfindung alle Schichtsilikate geeignet, beispielsweise Zweischicht-Minerale wie Kaolinit und Serpentin, Dreischicht-Minerale wie Montmorillonit oder Glimmer und Tonminerale wie Bentonite. Bevorzugt enthalten die erfindungsgemäßen Zusammensetzungen Bentonite oder Mischungen von Bentoniten und weiteren Schichtsilikaten oder Hydrotalkit.

Gemäß einer weiteren bevorzugten Ausführungsform werden interkalierte Schichtsilikate eingesetzt. Ausgangsschichtsilikate für diese interkalierten Schichtsilikate sind bevorzugt quellfähige Smectite, wie Montmorillonit, Hectorit, Saponit, Beidellit bzw. Bentonit.

Insbesondere geeignet sind im Rahmen der vorliegenden Erfindung organisch interkalierte Schichtsilikate, die einen Schichtabstand von etwa 1,5 nm bis 4 nm haben. Vorzugsweise sind diese Schichtsilicate mit quaternären Ammoniumverbindungen, protonierten Aminen, organischen Phosphoniumionen und/oder Aminocarbonsäuren interkaliert.

Die erfindungsgemäße Zusammensetzung kann auch Hydrotalkit oder mindestens ein Schichtsilikat und Hydrotalkit enthalten. Auch Hydrokalkit besitzt einen Schichtaufbau. Zu Hydrotalkit gehören auch Comblainit, Desautelsit, Pyroaurit, Reevesit, Sergeevit, Stichtit und Takovit. Ein im Rahmen der vorliegenden Erfindung bevorzugtes Hydrotalkit basiert auf Aluminium und Magnesium und ist mit Hydroxid, Nitrat und/oder Carbonationen in den Zwischenschichten neutralisiert. Ein erfindungsgemäß bevorzugter Hydrotalkit weist die Summenformel Mg₆Al₂[(OH)₁₆|CO₃] • 4H₂O auf.

Die in den erfindungsgemäßen Zusammensetzungen enthaltenen Hydrotalkite sind bevorzugt organisch interkaliert, das heißt die Anionen, die sich in den Zwischenschichten befinden, bevorzugt das Hydroxid-Kation, werden zumindest teilweise durch organische Anionen ausgetauscht. Im Rahmen der vorliegenden Erfindung bevorzugte organische Anionen sind Anionen von Fettsäuren und/oder hydrierten Fettsäuren.

Organisch interkalierte Schichtsilikate und organisch interkalierte Hydrotalkite lassen sich in den erfindungsgemäßen Zusammensetzungen gut verarbeiten. Beispielsweise wird bei der Vermischung von organisch interkalierten Schichtsilikaten und/oder organisch interkalierten Hydrotalkiten mit dem thermoplastischen Polyurethan eine gleichmäßige Verteilung der Schichtsilikate und/oder des Hydrotalkits erreicht.

Gemäß einer bevorzugten Ausführungsform betrifft die vorliegende Erfindung daher auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das Schichtsilikat ein organisch interkaliertes Schichtsilikat ist und/oder der Hydrotalkit ein organisch interkalierter Hydrotalkit ist.

Gemäß einer weiteren bevorzugten Ausführungsform betrifft die vorliegende Erfindung auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das Schichtsilikat Bentonit ist.

Das mindestens eine Schichtsilikat oder Hydrotalkit oder die Mischung davon ist in der erfindungsgemäßen Zusammensetzung vorzugsweise in einer Menge im Bereich von 0,5 Gew.-% bis 20 Gew.-%, bevorzugt 3 Gew.- % bis 15 Gew.- %, und besonders bevorzugt mit 3 Gew.- % bis 8 Gew.- %, jeweils bezogen auf die gesamte Zusammensetzung, enthalten.

Demgemäß betrifft die vorliegende Erfindung gemäß einer bevorzugten Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das mindestens eine Schichtsilikat oder Hydrotalkit oder die Mischung davon in einer Menge im Bereich von 0,5 Gew.-% bis 20 Gew.-%, bezogen auf die gesamte Zusammensetzung, enthalten ist.

Alle weiteren Gewichtsangaben der Bestandteile beziehen sich soweit nicht anders angegeben ebenfalls auf die gesamte Zusammensetzung. Dabei wird die Menge der in der Zusammensetzung enthaltenen Komponenten so gewählt, dass die Summe aller Komponenten der Zusammensetzung soweit nicht anders angegeben 100% Gew.-% ergibt.

### Thermoplastische Polyurethane

Thermoplastische Polyurethane sind grundsätzlich bekannt. Die Herstellung erfolgt üblicher Weise durch Umsetzung der Komponenten (a) Isocyanaten und (b) gegenüber Isocyanaten reaktiven Verbindungen und gegebenenfalls (c) Kettenverlängerungsmittel gegebenenfalls in Gegenwart von mindestens einem (d) Katalysator und/oder (e) üblichen Hilfsstoffen und/oder Zusatzstoffen. Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Die erfindungsgemäßen Zusammensetzungen enthalten mindestens ein auf mindestens einem Diisocyanat und mindestens einem Polycarbonatdiol basierendes thermoplastisches Polyurethan, wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole. Demgemäß wird zur Herstellung der in den erfindungsgemäßen Zusammensetzungen enthaltenen Polyurethane als Komponente (b) mindestens ein Polycarbonatdiol eingesetzt, wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Iso-cyanato-3,3,5-trimethyl-5-isocyanatomethyl-cyclohexan (Isophoron-diisocyanat, IPDI), 1,4-und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Besonders bevorzugt wird 4,4'-MDI eingesetzt.

Als gegenüber Isocyanaten reaktive Verbindungen (b) wird erfindungsgemäß mindestens ein Polycarbonatdiol eingesetzt. Geeignete Polycarbonatdiole sind Polycarbonatdiole, die auf Alkandiolen basieren. Geeignete Polycarbonatdiole sind streng difunktionelle OH-funktionelle Polycarbonatdiole. Geeignete Polycarbonatdiole basieren auf Butandiol, Pentandiol oder Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Es werden im Rahmen der vorliegenden Erfindung Polycarbonatdiole basierend auf Butandiol und Hexandiol, Polycarbonatdiole basierend auf Pentandiol und Hexandiol, Polycarbonatdiole basierend auf Hexandiol, und Mischungen aus zwei oder mehr dieser Polycarbonatdiole eingesetzt.

Vorzugsweise weisen die eingesetzten Polycarbonatdiole ein zahlenmittleres Molekulargewicht Mn im Bereich von 500 bis 4000, bestimmt über GPC, bevorzugt im Bereich von 650 bis 3500, bestimmt über GPC, besonders bevorzugt im Bereich von 800 bis 3000, bestimmt über GPC auf.

Gemäß einer weiteren bevorzugten Ausführungsform betrifft die vorliegende Erfindung auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das Polycarbonatdiol ein zahlenmittleres Molekulargewicht Mn im Bereich von 500 bis 4000, bestimmt über GPC, aufweist.

Die vorliegende Erfindung betrifft gemäß einer weiteren bevorzugten Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole und wobei das Polycarbonatdiol ein zahlenmittleres Molekulargewicht Mn im Bereich von 500 bis 4000, bestimmt über GPC, aufweist.

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1,2-Ethylenglykol, 1,3-Propandiol, 1,4-Butandiol, 1,6-Hexandiol, bevorzugt entsprechende Oligo- und/oder Polypropylenglykole, wobei auch Mischungen der Kettenverlängerer eingesetzt werden können. Bevorzugt haben die Verbindungen (c) nur primäre Hydroxylgruppen, ganz besonders bevorzugt ist 1,4-Butandiol.

Katalysatoren (d) welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-ethylhexanoat und Bismut-octanoat. Die Katalysatoren (d) werden bevorzugt in Mengen von 0,0001 bis 0,1 Gew.-Teilen pro 100 Gew.-Teile der mit Isocyanaten reaktiven Verbindung (b) eingesetzt. Bevorzugt werden Zinnkataylsatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Herstellungsverfahren für thermoplastische Polyurethane werden beispielsweise offenbart in EP 0922552 A1, DE 10103424 A1 oder WO 2006/072461 A1. Die Herstellung erfolgt üblicherweise auf einer Bandanlage oder einem Reaktionsextruder, kann aber auch im Labormaßstab, beispielsweise im Handgußverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. In dieses Material wird dann wenigstens ein Flammschutzmittel eingebracht und homogen verteilt. Das homogene Verteilen erfolgt vorzugsweise in einem Extruder, bevorzugt in einem Zweiwellenextruder. Zur Einstellung von Härte der TPU können die eingesetzten Mengen der Aufbaukomponenten (b) und (c) in relativ breiten molaren Verhältnissen variiert werden, wobei die Härte üblicherweise mit zunehmendem Gehalt an Kettenverlängerungsmittel (c) ansteigt.

Zur Herstellung von thermoplastischen Polyurethanen, z.B. solchen mit einer Härte Shore A von kleiner als 95, vorzugsweise von 95 bis 75 Shore A, besonders bevorzugt etwa 85 A, können beispielsweise die im wesentlichen difunktionellen Polyhydroxylverbindungen (b) und Kettenverlängerer (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der erfindungsgemäßen thermoplastischen Polyurethane werden die Aufbaukomponenten (a), (b) und (c) bevorzugt in Gegenwart von Katalysatoren (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Aufbaukomponenten (b) und (c) 0,9 bis 1,1 : 1, vorzugsweise 0,95 bis 1,05 : 1 und insbesondere ungefähr 0,96 bis 1,0 : 1 beträgt.

Die erfindungsgemäße Zusammensetzung enthält das mindestens eine thermoplastische Polyurethan in einer Menge im Bereich von 20 Gew.- % bis 90 Gew.-%, bezogen auf die gesamte Zusammensetzung, bevorzugt im Bereich von 30 Gew.-% bis 75 Gew.-%, weiter bevorzugt im Bereich von 40 Gew.- % bis 60 Gew.- % und besonders bevorzugt im Bereich von 45 Gew.-% bis 55 Gew.-%, jeweils bezogen auf die gesamte Zusammensetzung.

In einer Ausführungsform werden zur Herstellung der erfindungsgemäßen Zusammensetzungen thermoplastisches Polyurethan und Flammschutzmittel in einem Arbeitsschritt verarbeitet. In anderen bevorzugten Ausführungsformen wird zur Herstellung der erfindungsgemäßen Zusammensetzungen zunächst mit einem Reaktionsextruder, einer Bandanlage oder sonstigen geeigneten Vorrichtungen ein thermoplastisches Polyurethan hergestellt, bevorzugt als Granulat, in das dann in mindestens einem weiteren Arbeitsschritt, oder auch mehreren Arbeitsschritten, mindestens ein weiteres Flammschutzmittel eingebracht wird.

Das Vermischen des thermoplastischen Polyurethans mit dem mindestens einen Flammschutzmittel, insbesondere mit dem mindestens einen Metallhydroxid, dem mindestens einen phosphorhaltigen Flammschutzmittel, und gegebenenfalls mit mindestens einem Schichtsilikat und/oder Hydrotalkit erfolgt in einer Mischeinrichtung, die bevorzugt ein Innen-Kneter oder ein Extruder, bevorzugt ein Zweiwellenextruder, ist. Das Metallhydroxid ist bevorzugt ein Aluminiumhydroxid. In einer bevorzugten Ausführungsform ist zumindest ein in die Mischeinrichtung in dem mindestens einem weiteren Arbeitsschritt eingebrachte Flammschutzmittel flüssig, d.h. flüssig bei einer Temperatur von 21 °C. In einer anderen bevorzugten Ausführungsform der Verwendung eines Extruder ist das eingebrachte Flammschutzmittel bei einer Temperatur flüssig, die in Fließrichtung des Füllgutes in dem Extruders hinter dem Einfüllpunkt herrscht.

Vorzugsweise werden erfindungsgemäß thermoplastische Polyurethane hergestellt, bei denen das thermoplastische Polyurethan ein zahlenmittleres Molekulargewicht von mindestens 0,02x10⁶ g/mol, bevorzugt von mindestens 0,06 x10⁶ g/mol und insbesondere größer als 0,08 x10⁶ g/mol aufweist. Die Obergrenze für das zahlenmittlere Molekulargewicht der thermoplastischen Polyurethane wird in aller Regel durch die Verarbeitbarkeit wie auch das gewünschte Eigenschaftsspektrum bestimmt. Gleichzeitig liegt das zahlenmittlere Molekulargewicht der thermoplastischen Polyurethane erfindungsgemäß nicht über etwa 0,2 x10⁶ g/mol, bevorzugt 0,15 x10⁶ g/mol.

### Metallhydroxid

Die erfindungsgemäße Zusammensetzung enthält mindestens ein Metallhydroxid. Im Brandfall setzten Metallhydroxide ausschließlich Wasser frei und bilden daher keine toxischen oder korrosiven Rauchgasprodukte. Darüber hinaus sind diese Hydroxide in der Lage, die Rauchgasdichte im Brandfall zu reduzieren. Nachteil dieser Substanzen ist jedoch, dass sie gegebenenfalls die Hydrolyse von thermoplastischen Polyurethanen fördern und auch die oxidative Alterung der Polyurethane beeinflussen.

Geeignet sind im Rahmen der vorliegenden Erfindung vorzugsweise Hydroxide des Magnesiums, Calciums, Zinks und/oder Aluminiums oder Mischungen dieser. Besonders bevorzugt ist das Metallhydroxid ausgewählt aus der Gruppe bestehend aus Aluminiumhydroxiden, Aluminiumoxidhydroxiden, Magnesiumhydroxid und einer Mischung aus zwei oder mehr dieser Hydroxide.

Demgemäß betrifft die vorliegende Erfindung gemäß einer weiteren Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.

Eine bevorzugte Mischung ist Aluminiumhydroxid und Magnesiumhydroxid. Besonders bevorzugt ist Magnesiumhydroxid oder Aluminiumhydroxid. Ganz besonders bevorzugt ist Aluminiumhydroxid.

Demgemäß betrifft die vorliegende Erfindung gemäß einer weiteren Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das Metallhydroxid Aluminiumhydroxid ist.

Der Anteil des mindestens einen Metallhydroxids in den erfindungsgemäßen Zusammensetzungen liegt vorzugsweise im Bereich von 10 Gew.-% bis 80 Gew.-%. Bei höheren Füllgraden verschlechtern sich die mechanischen Eigenschaften der entsprechenden Polymerwerkstoffe in einer nicht akzeptablen Weise. So gehen insbesondere die für die Kabelisolierung wichtige Zugfestigkeit und Reißdehnung auf ein nicht akzeptables Maß zurück. Bevorzugt ist der Anteil des Metallhydroxids in der erfindungsgemäßen Zusammensetzung im Bereich von 10 Gew.-% bis 65 Gew.-%, weiter bevorzugt im Bereich von 20 Gew.-% bis 50 Gew.-%, weiter bevorzugt im Bereich von 25 Gew.-% bis 40 Gew.-%, jeweils bezogen auf die gesamte Zusammensetzung.

Die erfindungsgemäß eingesetzten Metallhydroxide haben üblicherweise eine spezifische Oberfläche von 2 m²/g bis 150 m²/g, bevorzugt liegt die spezifische Oberfläche jedoch zwischen 2 m²/g und 9 m²/g, weiter bevorzugt zwischen 3 m²/g und 8 m²/g, besonders bevorzugt zwischen 3 m²/g und 5 m²/g. Die spezifische Oberfläche wird mit dem BET Verfahren nach DIN ISO 9277:2003-05 mit Stickstoff bestimmt.

### Beschichtete Metallhydroxide

Erfindungsgemäß kann die Oberfläche der Metallhydroxide zumindest teilweise von einer Hülle umgeben sein, auch als zumindest teilweise Umhüllung bezeichnet. Die Hülle ist gleichzusetzen mit dem häufig verwendeten Begriff *Coating* oder Oberflächenbehandlung. Die Hülle haftet entweder durch Formschluss oder van-der Waals-Kräften rein physikalisch auf dem Metallhydroxid, oder sie ist chemisch mit dem Metallhydroxid verbunden. Dies geschieht überwiegend durch kovalente Wechselwirkung.

Die Oberflächenbehandlung oder auch Oberflächenmodifikation, die zu einer Hülle um das eingeschlossene Teil, in vorliegendem Fall das Metallhydroxid, insbesondere das Aluminiumhydroxid führt, wird ausführlich in der Literatur beschrieben. Ein Basiswerk in dem geeignete Materialien als auch die Beschichtungstechnik beschrieben wird, ist "Particulate-Filled Polymer Composites (2nd Edition), edited by: Rothon, Roger N., 2003, Smithers Rapra Technology. Besonders relevant ist das Kapitel 4. Entsprechende Materialien sind kommerziell erhältlich, z.B. bei der Firma Nabaltec, Schwandorf oder Martinswerke in Bergheim, beide in Deutschland.

Bevorzugte Beschichtungsmaterialien sind gesättigte oder ungesättigte Polymere mit Säurefunktion, bevorzugt mit mindestens einer Acrylsäure oder einem Säureanhydrid, bevorzugt Maleinsäureanhydrid, da sich diese besonders gut an die Oberfläche des Metallhydroxides anlagern.

Bei dem Polymer handelt es sich um ein Polymer oder Mischungen von Polymeren, bevorzugt ist ein Polymer. Bevorzugte Polymere sind Polymere von Mono- und Diolefinen, Mischungen hiervon, Copolymere von Mono- und Diolefinen untereinander oder mit anderen Vinylmonomeren, Polystyrol, Poly(p-methylstyrol), Poly-(alpha-methylstyrol), Copolymere von Styrol oder alpha-Methylstyrol mit Dienen oder Acrylderivaten, Propfcopolymere von Styrol oder alpha-Methylstyrol, halogenhaltige Polymere, Polymere, die sich von alpha-, beta-ungesättigten Säuren und deren Derivaten ableiten, und Copolymere dieser Monomere untereinander oder mit anderen ungesättigten Monomeren.

Ebenfalls bevorzugte Beschichtungsmaterialien sind monomere organische Säuren und ihre Salze, bevorzugt gesättigte Fettsäuren, weniger gebräuchlich sind ungesättigte Säuren. Bevorzugte Fettsäuren umfassen 10 bis 30 Kohlenstoffatome, bevorzugt 12 bis 22, insbesondere 16 bis 20 Kohlenstoffatom, sie sind aliphatisch und haben bevorzugt keine Doppelbindungen. Ganz besonders bevorzugt ist die Stearinsäure. Bevorzugte Fettsäurederivate sind ihre Salze, bevorzugt Calcium, Aluminium, Magnesium oder Zink. Besonders bevorzugt ist Calcium, insbesondere als Calciumstearat.

Andere bevorzugte Stoffe die eine Hülle um das Metallhydroxid, bevorzugt das Aluminiumhydroxid bilden sind Organosilanverbindungen mit folgendem Aufbau:

(R)₄₋ₙ --- Si --- Xₙ

mit n = 1, 2 oder 3.

X ist eine hydrolysierbare Gruppe, die mit der Oberfläche des Metallhydroxides reagiert, auch als Kupplungsgruppe bezeichnet. Bevorzugt ist der Rest R ein Kohlenwasserstoffrest und ist so ausgewählt, dass die Orgnosilanverbindung gut mit dem thermoplastischen Polyurethan mischbar ist. Der Rest R ist über eine hydrolytisch stabile Kohlenstoff-Silizium Verbindung mit dem Silicium verbunden und kann reaktiv sein oder inert. Ein Beispiel für einen reaktiven Rest, der bevorzugt ein ungesättigter Kohlenwasserstoffrest ist, ist ein Allylrest. Bevorzugt ist der Rest R inert, weiter bevorzugt ein gesättigter Kohlenstoffwasserstoffrest mit 2 bis 30 Kohlenstoffatomen, bevorzugt 6 bis 20 Kohlenstoffatomen und besonders bevorzugt 8 bis 18 Kohlenstoffatomen, weiter bevorzugt handelt es sich um einen aliphatischen Kohlenwasserstoffrest, der verzweigtkettig oder linear ist.

Weiter bevorzugt enthält die Organosilanverbindung nur einen Rest R und hat die allgemeine Formel:

R --- Si --- (X)₃

Bevorzugt ist die Kupplungsgruppe X ein Halogen, bevorzugt Chlor und demzufolge das Kupplungreaganz ein Tri-, Di- oder Monochlorsilan. Ebenfalls bevorzugt ist die Kupplungsgruppe X eine Alkoxy-Gruppe, bevorzugt eine Methoxy- oder eine Ethoxy-Gruppe. Ganz bevorzugt ist der Rest das Hexadecyl-Radikal, bevorzugt mit der Methoxy- oder Ethoxy-Kupplungsgruppe, somit ist das Organosilan das Hexadecylsilan.

Die Silane werden mit 0,1 Gew.-% bis 5 Gew.-%, weiter bevorzugt 0,5 Gew.-% bis 1,5 Gew.-% und besonders bevorzugt mit ca. 1 Gew. % bezogen auf die Gesamtmenge des Metallhydroxides auf dieses aufgebracht. Carbonsäuren und -derivate werden mit 0,1 Gew.-% bis 5 Gew.-%, weitere bevorzugt mit 1,5 Gew. % bis 5 Gew. % und besonders bevorzugt mit 3 Gew.-% bis 5 Gew.-% bezogen auf die Gesamtmenge des Metallhydroxid auf dieses aufgebracht.

Von den teilweise mit einer Hülle umgebenen Metallhydroxiden haben bevorzugt mehr als 50 %, weiter bevorzugt mehr als 70 %, weiter bevorzugt mehr als 90 % eine maximale Ausdehnung von weniger als 10 µm, bevorzugt weniger als 5 µm, besonders bevorzugt weniger als 3 µm. Gleichzeitig haben mindestens 50 % der Teilchen, bevorzugt mindestens 70 %, weiter bevorzugt mindestens 90 % zumindest eine maximale Ausdehnung von mehr als 0,1 µm, weiter bevorzugt von mehr als 0,5 µm und besonders bevorzugt mehr als 1 µm.

Bevorzugt werden bei der Herstellung der erfindungsgemäßen thermoplastischen Polyurethane Metallhydroxide verwendet, die bereits beschichtet sind. Nur so können ungewünschte Nebenreaktionen der Beschichtungsmaterialien mit den Bestandteilen des thermoplastischen Polyurethans vermieden werden und der Vorteil der Verhinderung des oxidativen Abbaus des thermoplastischen Polyurethans kommt besonders gut zum Tragen. Weiter bevorzugt kann die Beschichtung des Metallhydroxides auch im Einfüllbereich des Extruders erfolgen, bevor in einem flussabwärts gelegenen Teil des Extruders das Polyurethan zugegeben wird.

Gemäß einer weiteren Ausführungsform betrifft die vorliegende Erfindung demgemäß auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das Metallhydroxid zumindest teilweise von einer Hülle umgeben ist.

### Phosphorhaltige Flammschutzmittel

Die erfindungsgemäßen Zusammensetzungen enthalten mindestens ein phosphorhaltiges Flammschutzmittel. Erfindungsgemäß können prinzipiell alle bekannten phosphorhaltigen Flammschutzmittel für thermoplastische Polyurethane eingesetzt werden.

Bevorzugt werden im Rahmen der vorliegenden Erfindung Derivate der Phosphorsäure, Derivate der Phosphonsäure oder Derivate der Phosphinsäure oder Mischungen aus zwei oder mehreren dieser Derivate eingesetzt.

Demgemäß betrifft die vorliegende Erfindung gemäß einer weiteren Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das phosphorhaltige Flammschutzmittel ausgewählt ist aus der Gruppe bestehend aus Derivaten der Phosphorsäure, Derivaten der Phosphonsäure, Derivaten der Phosphinsäure und einer Mischung aus zwei oder mehr dieser Derivate.

Gemäß einer weiteren bevorzugten Ausführungsform ist das phosphorhaltige Flammschutzmittel bei 21 °C flüssig.

Bevorzugt handelt es sich bei den Derivaten der Phosphorsäure, Phosphonsäure oder Phosphinsäure um Salze mit organischem oder anorganischem Kation oder um organische Ester. Organische Ester sind Derivate der Phosphor-haltigen Säuren, bei denen zumindest ein direkt an den Phosphor gebundenes Sauerstoffatom mit einem organischen Rest verestert ist. In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der entsprechenden Phosphor-haltigen Säure verestert.

Organische Phosphatester sind bevorzugt, besonders die Triester, der Phosphorsäure, wie Trialkylphosphate und insbesondere Triarylphosphate, wie zum Beispiel Triphenylphosphat.

Bevorzugt werden erfindungsgemäß als Flammschutzmittel für die thermoplastischen Polyurethane Phosphorsäureester der allgemeinen Formel (I) 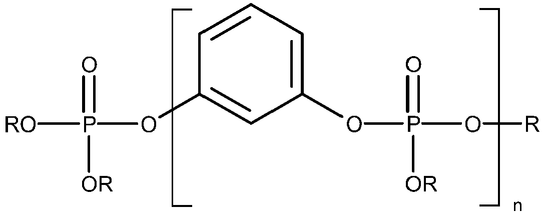 verwendet, wobei R für, gegebenenfalls substituierte, Alkyl-, Cycloalkyl- oder Phenylgruppen steht und n = 1 bis 15 bedeutet.

Steht R in der allgemeinen Formel (I) für einen Alkylrest, kommen insbesondere solche Alkylreste mit 1 bis 8 C-Atomen in Betracht. Als Beispiel für die Cycloalkylgruppen sei der Cyclohexyl-Rest genannt. Bevorzugt werden solche Phosphorsäureester der allgemeinen Formel (I) eingesetzt, bei denen R = Phenyl oder alkylsubstituiertes Phenyl bedeutet. n ist in der allgemeinen Formel (I) insbesondere 1 oder liegt vorzugsweise im Bereich von etwa 3 bis 6. Als Beispiele für die bevorzugten Phosphorsäureester der allgemeinen Formel (I) seien das 1,3-Phenylen-bis-(diphenyl)phosphat, das 1,3-Phenylen-bis-(dixylenyl)phosphat sowie die entsprechenden oligomeren Produkte mit einem mittleren Oligomerisierungsgrad von n = 3 bis 6 genannt. Ein bevorzugtes Resorcinol ist Resorcinol bis-diphenylphosphat (RDP), das üblicherweise in Oligomeren vorliegt.

Weitere bevorzugte phosphorhaltige Flammschutzmittel sind Bisphenol-A bis-(diphenylphosphat) (BDP), das üblicherweise als Oligomer vorliegt, und Diphenylkresylphosphat (DPK).

Demgemäß betrifft die vorliegende Erfindung gemäß einer weiteren Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei das phosphorhaltige Flammschutzmittel ausgewählt ist aus der Gruppe bestehend aus Resorcinol bis-diphenylphosphat (RDP), Bisphenol-A bis-(diphenylphosphat) (BDP), und Diphenylkresylphosphat (DPK).

Bei den organischen Phosphonaten handelt es sich um Salze mit organischem oder anorganischem Kation oder um die Ester der Phosphonsäure. Bevorzugte Ester der Phosphonsäure sind die Diester von Alkyl- oder Phenylphosphonsäuren. Beispielhaft für die erfindungsgemäß als Flammschutzmittel einzusetzenden Phosphonsäureester seien die Phosphonate der allgemeinen Formel (II) 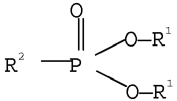 angeführt, wobei
- R¹: für gegebenenfalls substituierte, Alkyl-, Cycloalkyl- oder Phenylgruppen steht, wobei die beiden Reste R¹ auch cyclisch miteinander verknüpft sein können und
- R²:: für einen, gegebenenfalls substituierten, Alkyl-, Cycloalkyl- oder Phenylrest steht.

Besonders geeignet sind dabei cyclische Phosphonate wie z.B. 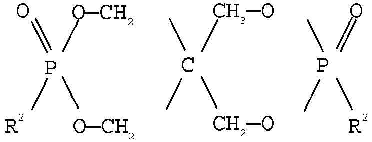 mit R² = CH₃ und C₆H₅, die sich vom Pentaerythrit ableiten, oder 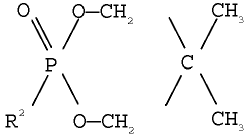 mit R² = CH₃ und C₆H₅, die sich vom Neopentylglykol ableiten, oder 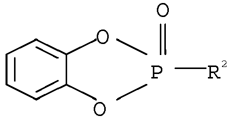 mit R² = CH₃ und C₆H₅, die sich vom Brenzkatechin ableiten, aber auch 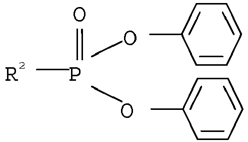 mit R² = einem unsubstituierten oder auch substituierten Phenylrest.

Phosphinsäureester haben die allgemeine Formel R¹R²(P=O)OR³, wobei alle drei organischen Gruppen R¹, R² und R³ gleich oder verschieden sein können. Die Reste R¹, R² und R³ sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Weiter bevorzugt ist auch R³ ein Ethylrest oder ein Methylrest. In einer bevorzugten Ausführungsform sind R¹, R² und R³ gleichzeitig Ethylrest oder Methylreste.

Bevorzugt sind auch Phosphinate, d.h. die Salze der Phosphinsäure. Die Reste R¹ und R² sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Bevorzugte Salze der Phosphinsäuren sind Aluminium-, Calcium- oder Zinksalze. Eine bevorzugte Ausführungsform ist Diethylaluminiumphosphinat.

Die phophorhaltigen Flammschutzmittel, ihre Salze und/oder ihre Derivate werden in den erfindungsgemäßen Zusammensetzungen als Einzelsubstanz oder in Mischungen verwendet.

Im Rahmen der vorliegenden Erfindung wird das mindestens eine phosphorhaltige Flammschutzmittel in einer Menge eingesetzt, dass der Gehalt an Phosphor berechnet auf das gesamte phosphorhaltige Flammschutzmittel größer als 5 Gew.-%, weiter bevorzugt größer als 7 Gew.-% ist. Gleichzeitig ist der Gehalt an phosphorhaltigen Flammschutzmitteln in der Zusammensetzung beispielsweise geringer als 30 Gew.-%, bevorzugt kleiner als 20 Gew.-% und besonders bevorzugt kleiner als 15 Gew.-%. Bevorzugt ist das mindestens eine phosphorhaltige Flammschutzmittel in einer Menge im Bereich von 3 Gew.-% bis 30 Gew.-% enthalten, weiter bevorzugt im Bereich von 5 Gew.- % bis 20 Gew.- % und besonders bevorzugt im Bereich von 8 Gew.- % bis 15 Gew.- %, jeweils bezogen auf die gesamte Zusammensetzung.

Gemäß einer bevorzugten Ausführungsform enthält die erfindungsgemäße Zusammensetzung als phosphorhaltiges Flammschutzmittel Resorcinol bis-diphenylphosphat (RDP). Gemäß einer weiteren bevorzugten Ausführungsform enthält die erfindungsgemäße Zusammensetzung als phosphorhaltiges Flammschutzmittel Resorcinol bis-diphenylphosphat (RDP) und Aluminiumhydroxid. Gemäß einer weiteren bevorzugten Ausführungsform enthält die erfindungsgemäße Zusammensetzung als phosphorhaltiges Flammschutzmittel Resorcinol bis-diphenylphosphat (RDP), Aluminiumhydroxid und eine Schichtsilikat und/oder Hydrotalkit.

Durch die Kombination der verschiedenen Flammschutzmittel werden mechanische Eigenschaften und Flammschutzeigenschaften auf die jeweilige Anforderung optimiert.

Gemäß der vorliegenden Erfindung werden das phosphorhaltige Flammschutzmittel, insbesondere die Phosphorsäureester, Phosphonsäureester und/oder Phospinsäureester und/oder deren Salze in Mischung zusammen mit mindestens einem Metallhydroxid als Flammschutzmittel eingesetzt. Dabei ist das Gewichtsverhältnis der Summe des Gewichts der eingesetzten Phosphatester, Phosphonatester und Phosphinatatester zu dem Gewicht des eingesetzten Metallhydroxid in der erfindungsgemäßen Zusammensetzung vorzugsweise im Bereich von 1:5 bis 1:2.

Enthält die erfindungsgemäße Zusammensetzung neben dem mindestens einen Metallhydroxid und dem mindestens einen phosphorhaltigen Flammschutzmittel noch mindestens ein Schichtsilikat oder Hydrotalkit oder Mischungen davon, ist vorzugsweise das mindestens eine phosphorhaltige Flammschutzmittel in einer Menge im Bereich von 3 Gew.-% bis 30 Gew.-% enthalten, weiter bevorzugt im Bereich von 5 Gew.- % bis 20 Gew.- % und besonders bevorzugt im Bereich von 8 Gew.- % bis 15 Gew.- %, jeweils bezogen auf die gesamte Zusammensetzung.

Gleichzeitig ist das mindestens eine Metallhydroxid bevorzugt in einer Menge im Bereich von 10 Gew.-% bis 65 Gew. % bezogen auf die gesamte Zusammensetzung, bevorzugt im Bereich von 15 Gew.- % bis 50 Gew.- % und besonders bevorzugt im Bereich von 25 Gew.- % bis 40 Gew.-% enthalten, jeweils bezogen auf die gesamte Zusammensetzung.

Demgemäß betrifft die vorliegende Erfindung auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei der Anteil des Metallhydroxids in der Zusammensetzung im Bereich von 10 bis 65 % bezogen auf die gesamte Zusammensetzung, liegt.

Gemäß einer weiteren Ausführungsform betrifft die vorliegende Erfindung auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei der Anteil des phosphorhaltigen Flammschutzmittels im Bereich von 3 bis 30 % bezogen auf die gesamte Zusammensetzung, liegt.

Gemäß einer weiteren bevorzugten Ausführungsform betrifft die vorliegende Erfindung damit auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei der Anteil des Metallhydroxids in der Zusammensetzung im Bereich von 10 bis 65 % bezogen auf die gesamte Zusammensetzung, liegt und der Anteil des phosphorhaltigen Flammschutzmittels im Bereich von 3 bis 30 % bezogen auf die gesamte Zusammensetzung, liegt.

Enthält die erfindungsgemäße Zusammensetzung neben dem mindestens einen Metallhydroxid und dem mindestens einen phosphorhaltigen Flammschutzmittel noch mindestens ein Schichtsilikat oder Hydrotalkit oder Mischungen davon, ist vorzugsweise der Anteil der Summe der Gewichtsprozente (Gew.- %) dieser Bestandteile, in Summe auch als Flammschutzmittel angesprochen, in der erfindungsgemäßen Zusammensetzung im Bereich von 10 Gew.- % bis 80 Gew.-%, bezogen auf die gesamte Zusammensetzung, bevorzugt im Bereich von 25 Gew.-% bis 70 Gew.-%, weiter bevorzugt im Bereich von 40 Gew.- % bis 60 Gew.- % und besonders bevorzugt im Bereich von 45 Gew.-% bis 55 Gew.-%.

Demgemäß betrifft die vorliegende Erfindung gemäß einer weiteren Ausführungsform auch eine Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben, wobei der Anteil der Summe der Gewichts-Anteile des mindestens einen Metallhydroxids, des mindestens einen phosphorhaltigen Flammschutzmittels und des mindestens einen Schichtsilikats oder Hydrotalkits oder Mischungen davon im Bereich von 10 bis 80 %, bezogen auf die gesamte Zusammensetzung, liegt.

Die Gewichtsanteile des mindestens einen phosphorhaltigen Flammschutzmittels zu Metallhydroxid zu dem mindestens einen Schichtsilkat oder Hydrotalkit oder der Mischung davon verhalten sich wie a zu b zu c, wobei a erfindungsgemäß beispielsweise im Bereich von 5 bis 15 variiert werden kann, b beispielsweise im Bereich von 30 bis 40 und c beispielsweise im Bereich von 0 bis 8, bevorzugt im Bereich von 3 bis 8. Weiter bevorzugt verhalten sich die Gewichtsanteile des mindestens einen phosphorhaltigen Flammschutzmittels zu Metallhydroxid zu dem mindestens einen Schichtsilkat oder Hydrotalkit oder der Mischung davon wie etwa 9 zu 34 zu 5.

Die vorliegende Erfindung betrifft auch die Verwendung der erfindungsgemäßen Zusammensetzung enthaltend mindestens ein flammgeschütztes thermoplastisches Polyurethan wie zuvor beschrieben, zur Herstellung von Beschichtungen, Dämpfungselementen, Faltenbälgen, Folien oder Fasern, Formkörpern, Fußböden für Gebäude und Transport, "non woven" Gewebe, bevorzugt Dichtungen, Rollen, Schuhsohlen, Schläuchen, Kabel, Kabelstecker, Kabelummantelungen, Kissen, Laminaten, Profilen, Riemen, Sätteln, Schäumen, Steckverbindungen, Schleppkabel, Solarmodulen, Verkleidungen in Automobilen. Bevorzugt ist die Verwendung zur Herstellung von Kabelummantelungen. Die Herstellung erfolgt bevorzugt aus Granulaten, durch Spritzguss, Kalandrieren, Pulversintern, oder Extrusion und/oder durch zusätzliches Schäumen der erfindungsgemäßen Zusammensetzung.

Demgemäß betrifft die vorliegende Erfindung auch die Verwendung einer Zusammensetzung enthaltend mindestens ein auf mindestens einem Diisocyanat und mindestens einem Polycarbonatdiol basierendes thermoplastisches Polyurethan, mindestens ein Metallhydroxid und mindestens ein phosphorhaltiges Flammschutzmittel wie zuvor beschrieben zur Herstellung von Kabelummantelungen.

Weitere Ausführungsformen der vorliegenden Erfindung sind den Ansprüchen und den Beispielen zu entnehmen.

Die nachfolgenden Beispiele dienen der Veranschaulichung der Erfindung.

### BEISPIELE

Die Beispiele zeigen die verbesserte Flammfestigkeit der erfindungsgemäßen Zusammensetzungen, sowie die guten mechanischen Eigenschaften und die Hydrolysebeständigkeit.

### 1. Herstellbeispiel

### 1.1 Einsatzstoffe

Elastollan 1185A10: TPU der Shore Härte 85A der BASF Polyurethanes GmbH, Elastogranstrasse 60, 49448 Lemförde, basiert auf Polytetrahydrofuran (PTHF) mit einem Molekulargewicht von 1000, 1,4-Butandiol, MDI.
Elastollan A: TPU der Shore Härte 86A, Versuchsmaterial, basiert auf einem Polycarbonatdiol der Firma Bayer (Desmophen 2200), 1,4-Butandiol, MDI.
Elastollan B: TPU der Shore Härte 87A, Versuchsmaterial, basiert auf einem Polycarbonatdiol der Firma Ube (Eternacoll PH-200D), 1,4-Butandiol, MDI.
Martinal OL 104 LEO: Aluminiumhydroxid ohne Coating, Martinswerk GmbH, Kölner Strasse 110, 50127 Bergheim, Al(OH)₃-Gehalt [%] ≈ 99.4, Teilchengröße (Laserbeugung, Cilas) [µm] D50: 1.7 - 2.1; Spezifische Oberfläche (BET) [m²/g]: 3 - 5.
Magnifin H5 MV: Magnesiumhydroxid mit einem hydrophoben Oberflächencoating, Martinswerk GmbH, Kölner Strasse 110, 50127 Bergheim, Mg(OH)2-Gehalt [%] > 99.8, Teilchengröße (Laserbeugung) [µm] D50: 1,6-2; Spezifische Oberfläche (BET) [m2/g]: 2-5
Nanofil 15: organisch modifiziertes nano-dispergierbares Schichtsilikat auf Basis natürlicher Bentonite, Rockwood Clay Additives GmbH, Stadtwaldstraße 44, D-85368 Moosburg, Pulver, mittlere Korngröße D50, d.h. mindestens 50 % der Teilchen sind kleiner als 40µm.
Disflamoll TOF: Tris(2-ethylhexyl)phosphate, CAS 78-42-2, Lanxess Deutschland GmbH, 51369 Leverkusen
Fyrolflex RDP: Resorcinol bis (diphenyl phosphat), CAS #: 125997-21-9, Supresta Netherlands B.V., Office Park De Hoef, Hoefseweg 1, 3821 AE Amersfoort, The Netherlands.

### 1.2 Herstellung im Handgußverfahren

Die in der zugrundeliegenden Rezeptur festgelegte Menge Polyol und der Kettenverlängerer wird in der Weißblechdose eingewogen und kurz mit Stickstoff beschleiert. Die Dose wird mit einem Deckel verschlossen und im Heizschrank auf ca. 90°C aufgeheizt.

Ein weiterer Heizschrank zum Tempern der Schwarte wird auf 80 °C vorgeheizt. Die Teflonschale wird auf den Heiztisch gestellt und dieser auf 125°C eingestellt.

Die berechnete Menge an flüssigem Isocyanat wird durch Auslitern bestimmt. Dazu wird das flüssige Isocyanat (MDI wird mit einer Temperatur von ca. 48 °C ausgelitert) in einem PE-Becher eingewogen und innerhalb von 10s in einen PE-Becher ausgegossen. Anschließend wird der so entleerte Becher tariert und mit der berechneten Menge an Isocyanat befüllt. Im Fall von MDI wird dieser bei ca. 48°C im Heizschrank gelagert.

Zusätze wie Hydrolyseschutz, Antioxidans, etc. die bei RT als Feststoffe vorliegen, werden direkt eingewogen.

Das vorgeheizte Polyol wird auf einer Hebebühne unter den ruhenden Rührer gestellt. Anschließend wird das Reaktionsgefäß mit der Hebebühne soweit angehoben, bis die Rührblätter vollständig in das Polyol eintauchen.

Bevor der Rührmotor eingeschaltet wird, unbedingt darauf achten, dass sich der Drehzahlregler in der Nullstellung befindet. Anschließend wird die Drehzahl langsam hochgeregelt, so dass eine gute Durchmischung ohne Einrühren von Luft gewährleistet wird.

Anschließend werden Additive wie z.B. Antioxidantien in das Polyol gegeben.

Die Temperatur der Reaktionsmischung wird vorsichtig mit einem Heißluftfön auf 80°C eingestellt.

Falls erforderlich wird vor der Isocyanatzugabe Katalysator mit der Microliterspritze zur Reaktionsmischung dosiert. Bei 80 °C erfolgt nun die Zugabe von Isocyanat, indem die zuvor ausgeliterte Menge innerhalb von 10s in die Reaktionsmischung eingetragen wird. Durch Rückwaage erfolgt die Gewichtskontrolle. Abweichungen größer/kleiner 0,2 g von der Rezepturmenge werden dokumentiert. Mit der Zugabe des Isocyanats wird die Stoppuhr gestartet. Bei Erreichen von 110°C wird die Reaktionsmischung in die Teflonschalen, die auf 125°C vorgeheizt sind, ausgegossen.

10min nach Start der Stoppuhr wird die Schwarte vom Heiztisch genommen und anschließend für 15h im Heizschrank bei 80°C gelagert. Die ausgekühlte Schwarte wird in der Schneidmühle zerkleinert. Das Granulat wird nun für 3h bei 110°C getrocknet und trocken gelagert.

Grundsätzlich kann dieses Verfahren auf den Reaktionsextruder oder das Bandverfahren übertragen werden.

Rezeptur für Elastollan A und B:

| | |
|---|---|
| Polycarbonatdiol | 1000 g |
| Lupranat MET | 460 g |
| Butandiol-1,4 | 115 g |
| Elastostab H01 | 33 g |
| Irganox 1125 | 33 g |

Für die Herstellung von Elastollan A wird als Polycarbonatdiol ein Polycarbonatdiol der Firma Bayer (Desmophen 2200) eingesetzt, für die Herstellung von Elastollan B ein Polycarbonatdiol der Firma Ube (Eternacoll PH-200D).

### 2. Beispiel - Flammwidrigkeit

Um die Flammwidrigkeit zu bewerten, wird ein Probekörper mit 5mm Dicke horizontal bei einer Strahlungsintensität von 35kW/m² im Cone Kalorimeter nach der ISO 5660 Teil 1 und Teil 2 (2002-12) geprüft.

In den nachfolgenden Tabellen werden Zusammensetzungen aufgeführt, in denen die einzelnen Einsatzstoffe in Gewichtsanteilen (GT) angegeben sind. Die Mischungen wurden jeweils mit einem Doppelwellen-Extruder Typ ZE 40 A der Fa. Berstorff mit einer Verfahrensteillänge von 35 D unterteilt in 10 Gehäuse hergestellt und anschließend mit einem Einwellen-Extruder Typ Arenz mit einer Dreizonenschnecke mit Mischteil (Schneckenverhältnis 1:3) zu Folien mit einer Dicke von 1,6 mm extrudiert. Die Prüfkörper für die Cone Messungen mit Abmessungen von 200x150x5mm wurden an einer Arburg 520S mit einem Schneckendurchmesser von 30 mm spritzgegossen (Zone1 - Zone 3 180°C, Zone 4-Zone 6 185°C). Die Platten wurden dann auf die für die Cone Messung nötige Größe gesägt.

**Tabelle 1**

| Versuchsnummer | | 1 | 2 | 3 | 4 | 5 | 6 | 7 | 8 | 9 | 10 | 11 |
|---|---|---|---|---|---|---|---|---|---|---|---|---|
| | Gewichtsteile [GT] | VB | egB | egB | VB | egB | VB | egB | VB | egB | VB | egB |
| Elastollan 1185A10 | [GT] | 51 | | | 51 | | 51 | | 51 | | 51 | |
| Elastollan A | [GT] | | 51 | | | | | | | | | |
| Elastollan B | [GT] | | | 51 | | 51 | | 51 | | 51 | | 51 |
| Fyrolflex RDP | [GT] | 10 | 10 | 10 | 10 | 10 | | | 11 | 11 | 11 | 11 |
| Disflamoll TOF | [GT] | | | | | | 10 | 10 | | | | |
| Nanofil 15 | [GT] | 5 | 5 | 5 | 5 | 5 | 5 | 5 | | | | |
| Martinal OL 104 LEO | [GT] | 34 | 34 | 34 | | | 34 | 34 | 38 | 38 | | |
| Magnivin H5 MV | [GT] | | | | 34 | 34 | | | | | 38 | 38 |

| | | | | | | | | | | | | |
|---|---|---|---|---|---|---|---|---|---|---|---|---|
| VB: Vergleichsbeispiel, egB: erfindungsgemäßes Beispiel | | | | | | | | | | | | |

**Tabelle 2**

| **Versuchsnummern:** | | | 1 | 2 | 3 | 4 | 5 | 6 | 7 | 8 | 9 | 10 | 11 |
|---|---|---|---|---|---|---|---|---|---|---|---|---|---|
| **Eigenschaften** | Vorschrift | Einheit | | | | | | | | | | | |
| Zündzeitpunkt (TIG, Time to Ignition) | ISO 5660 Teil 1 | [s] | 70 | 79 | 78 | 80 | 73 | 64 | 57 | 91 | 83 | 53 | 61 |
| Gesamte Wärmefreisetzung (THR, Total Heat Release) | | [MJ/m²] | 129 | 115 | 112 | 130 | 122 | 134 | 124 | 120 | 92 | 126 | 121 |
| Maximale Wärmefreisetzung (PHRR, Peak of Heat Release Rate) | | [kW/m²] | 150 | 159 | 161 | 291 | 257 | 193 | 159 | 497 | 324 | 267 | 199 |
| MAHRE | | [kW/m²] | 116 | 107 | 104 | 207 | 211 | 138 | 121 | 259 | 217 | 173 | 139 |
| Rückstand (residue) | | [%] | 26 | 29 | 28 | 31 | 30 | 27 | 30 | 20 | 26 | 33 | 31 |
| Gesamte Rauchentwicklung definierte Fläche (Total smoke production on surface area basis) | | [m²/m²] | 4296 | 2757 | 2965 | n.b. | n.b. | 3039 | 2521 | 5335 | 4357 | 2608 | 2469 |
| Maximalen Wärmefreisetzung zum Zündzeitpunkt (PHRR/TIG) | | | 2,1 | 2,0 | 2,1 | 3,6 | 3,5 | 3,0 | 2,8 | 5,5 | 3,9 | 5,0 | 3,3 |

| | | | | | | | | | | | | | |
|---|---|---|---|---|---|---|---|---|---|---|---|---|---|
| n.b.: Werte wurden nicht bestimmt | | | | | | | | | | | | | |

Nach Petrella (Petrella R.V., The assessment of full scale fire hazards from cone calorimeter data, JournalofFire Science, 12 (1994), p. 14) ist der Quotient aus maximaler Wärmefreisetzung und Zündzeitpunkt ein Maß dafür, wie das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt.

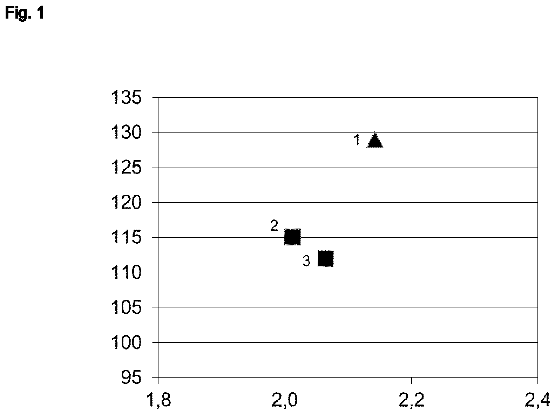

Die Ergebnisse der Cone Kalorimertermessungen der Mischungen 1 bis 11 wurden in einem Petrellaplot graphisch dargestellt, der in Fig. 1 bis Fig. 5 wiedergegeben ist. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Dabei weisen Materialien mit besseren Flammfestigkeiten möglichst kleine x und y Werte auf. Die Ergebnisse sind in der Tabelle 2 sowie dem jeweiligen Petrella Plot zusammengefasst. Die erfindungsgemäßen Materialien haben eine höhere Flammfestigkeit. Die erfindungsgemäßen Mischungen weisen eine geringere Rauchgasdichte auf.

### 3. Beispiel - mechanische Eigenschaften

Die Mischung 1 ist ein Vergleichsbeispiel, wobei ein thermoplastisches Polyurethan basierend auf Polyetherpolyol eingesetzt wurde.

Die Mischungen 2 und 3 sind erfindungsgemäß und zeigen, dass der Einsatz von thermoplastischen Polyurethanen basierend auf Polycarbonatdiolen zu thermoplastischen Polyurethanen mit guten mechanischen Eigenschaften führt. Gemessen wurde die Zugfestigkeit bzw. Reissdehnung (gemäß DIN 53504) und die Shore Härte A (gemäß DIN 53505) der entsprechenden Probenkörper.

**Tabelle 3**

| | Versuchsnummer: | | 1 | 2 | 3 |
|---|---|---|---|---|---|
| **Eigenschaften** | Vorschrift | Einheit | | | |
| Zugfestigkeit | DIN 53504 | [MPa] | 26 | 26 | 24 |
| Reissdehnung | | [%] | 660 | 510 | 470 |
| Shore Härte A | DIN 53505 | [MPa] | 86 | 87 | 89 |

### 4. Beispiel - Alterungsbeständigkeit

Die Mischungen 1 ist ein Vergleichsbeispiel, wobei ein thermoplastisches Polyurethan basierend auf Polyetherpolyol eingesetzt wurde. Mischungen 4 und 8 sind ebenfalls Vergleichsbeispiele.

Die Mischungen 2 und 3 sind erfindungsgemäß und zeigen, dass der Einsatz von thermoplastischen Polyurethanen basierend auf Polycarbonatdiolen die Flammfestigkeit deutlich verbessert. Auch Mischungen 5 und 9 sind erfindungsgemäße Beispiele.

Von oxidativer Alterung wird im Zusammenhang mit dieser Erfindung gesprochen, wenn sich bei den thermoplastischen Polyurethanen im Laufe der Zeit die mechanischen Parameter, wie Zugfestigkeit, Reißdehnung, Weiterreißfestigkeit, Flexibilität, Schlagfestigkeit, Weichheit etc. negativ verändern.

Um die oxidative Alterungsbeständigkeit zu bewerten, wird ein Probekörper bei 113 °C für 7 Tage, bei 121 °C für 7 Tage und bei 136 °C für 7 Tage in einem Umluftofen gelagert und anschließend mechanische Parameter bestimmt. Die Ergebnisse sind in den nachfolgenden Tabellen 4, 5 und 6 zusammengefasst.

**Tabelle 4**

| **Versuchsnummern:** | | | 1 | 2 | 3 | 4 | 5 | 8 | 9 |
|---|---|---|---|---|---|---|---|---|---|
| **Eigenschaften** | Vorschrift | Einheit | | | | | | | |
| Zugfestigkeit | DIN 53504 | [MPa] | 26 | 26 | 24 | 29 | 28 | 29 | 30 |
| Reissdehnung | | [%] | 660 | 510 | 470 | 570 | 450 | 680 | 450 |

| ***Nach Alterung 7d*/*113°C*** | | | | | | | | | |
|---|---|---|---|---|---|---|---|---|---|
| Zugfestigkeit | DIN 53504 | [MPa] | 16 | 24 | 21 | 25 | 25 | 27 | 28 |
| Änderung Zugfestigkeit | | [%] | -38 | -8 | -13 | -14 | -11 | -17 | -7 |
| Reissdehnung | DIN 53504 | [%] | 650 | 510 | 550 | 690 | 530 | 740 | 550 |
| Änderung Reißdehnung | | [%] | 14 | 0 | 17 | 21 | 18 | 9 | 22 |

**Tabelle 5**

| **Eigenschaften** | | | 1 | 2 | 3 | 4 | 5 | 8 | 9 |
|---|---|---|---|---|---|---|---|---|---|
| Zugfestigkeit | DIN 53504 | [MPa] | 26 | 26 | 26 | 29 | 28 | 29 | 30 |
| Reissdehnung | | [%] | 660 | 510 | 510 | 570 | 450 | 680 | 450 |

| ***Nach Alterung 7d*/*121°C*** | | | | | | | | | |
|---|---|---|---|---|---|---|---|---|---|
| Zugfestigkeit | DIN 53504 | [MPa] | 10 | n.b. | 16 | 21 | 22 | 20 | 26 |
| Änderung Zugfestigkeit | | [%] | -62 | n.b. | -33 | -28 | -21 | -31 | -13 |
| Reissdehnung | DIN 53504 | [%] | 430 | n.b. | 570 | 660 | 560 | 630 | 580 |
| Änderung Reißdehnung | | [%] | -35 | n.b. | 21 | 16 | 24 | -7 | 29 |

| | | | | | | | | | |
|---|---|---|---|---|---|---|---|---|---|
| n.b.: Werte wurden nicht bestimmt | | | | | | | | | |

**Tabelle 6**

| | **Versuchsnummern:** | | 1 | 2 | 3 | 4 | 5 | 8 | 9 |
|---|---|---|---|---|---|---|---|---|---|
| **Eigenschaften** | Vorschrift | Einheit | | | | | | | |
| Zugfestigkeit | DIN 53504 | [MPa] | 26 | 26 | 26 | 29 | 28 | 29 | 30 |
| Reissdehnung | | [%] | 660 | 510 | 470 | 570 | 450 | 680 | 450 |

| ***Nach Alterung 7d*/*136°C*** | | | | | | | | | |
|---|---|---|---|---|---|---|---|---|---|
| Zugfestigkeit | DIN 53504 | [MPa] | 8 | 15 | 15 | 11 | 17 | 12 | 20 |
| Änderung Zugfestigkeit | | [%] | -69 | -42 | -42 | -58 | -39 | -59 | -33 |
| Reissdehnung | DIN 53504 | [%] | 190 | 440 | 440 | 520 | 580 | 470 | 580 |
| Änderung Reißdehnung | | [%] | -71 | -19 | -6 | -12 | 29 | -31 | 29 |

Die Mischungen 2, 3, 5 und 9 sind erfindungsgemäß und zeigen, dass der Einsatz von Mischungen enthaltend thermoplastischen Polyurethanen basierend auf Polycarbonatdiolen den Festigkeitsabfall durch Wärmebehandlung signifikant verringert, d.h. die oxidative Alterungsbeständigkeit deutlich verbessert.

### 5. Beispiel - Hydrolysebeständigkeit

Um die Hydrolysebeständigkeit zu bewerten, wird ein Probekörper bei 80 °C für 1008 Stunden in Wasser gelagert und anschließend mechanische Parameter bestimmt. Die Ergebnisse sind in der nachfolgenden Tabelle 7 zusammengefasst.

**Tabelle 7**

| Zusammensetzung gemäß | 0h | H₂O/1008h | % verbleibend |
|---|---|---|---|
| Versuchsnummer 1 | 26 | 12 | 46 |
| Versuchsnummer 2 | 26 | 13 | 50 |

Die Mischung 2 ist erfindungsgemäß und zeigt, dass der Einsatz von Mischungen enthaltend thermoplastischen Polyurethanen basierend auf Polycarbonatdiolen ähnlich gute Hydrolyseeigenschaften besitzen wie Mischungen enthaltend thermoplastische Polyurethane basierend auf Polyethern.

### Kurze Beschreibung der Figuren

- Fig. 1: zeigt die Ergebnisse der Cone Kalorimertermessungen der Mischungen 1-3 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, Journal of Fire Science, 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Die Materialien 2 und 3 (symbolisiert über die beiden gefüllten Quadrate) weisen gegenüber Vergleichsmaterial 1 (symbolisiert über das gefüllte Dreieck) bessere Eigenschaften auf.

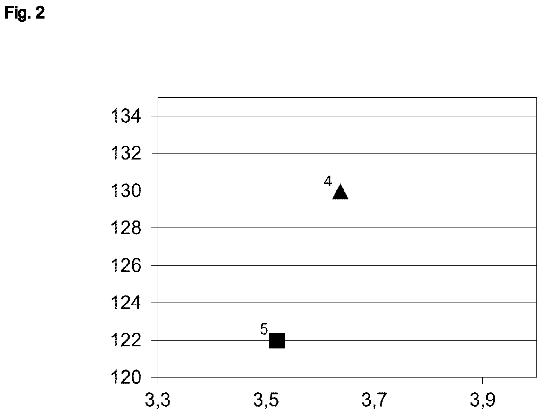

- Fig. 2: zeigt die Ergebnisse der Cone Kalorimertermessungen der Mischungen 4 und 5 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, Journal of Fire Science, 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Material 5 (symbolisiert über das gefüllte Quadrat) weist gegenüber Vergleichsmaterial 4 (symbolisiert über das gefüllte Dreieck) bessere Eigenschaften auf.

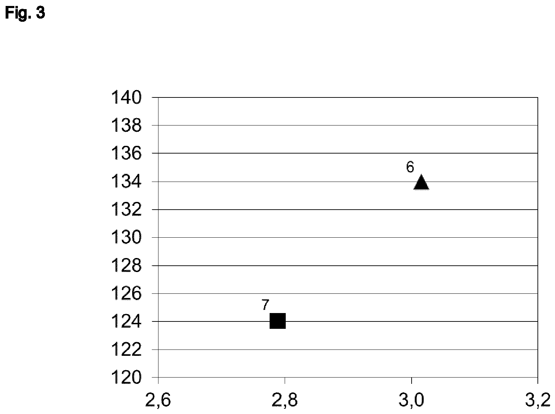

- Fig. 3: zeigt die Ergebnisse der Cone Kalorimertermessungen der Mischungen 6 und 7 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, Journal of Fire Science, 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Material 7 (symbolisiert über das gefüllte Quadrat) weist gegenüber Vergleichsmaterial 6 (symbolisiert über das gefüllte Dreieck) bessere Eigenschaften auf.

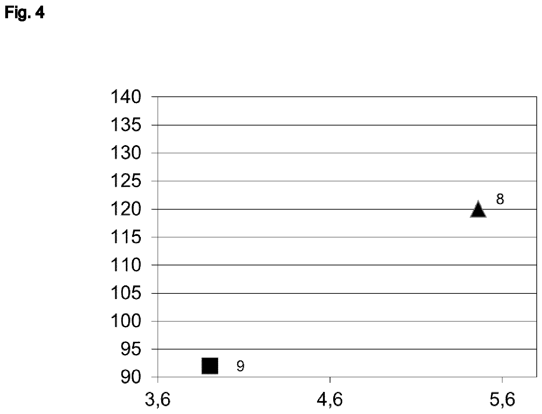

- Fig. 4: zeigt die Ergebnisse der Cone Kalorimertermessungen der Mischungen 8 und 9 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, Journal of Fire Science, 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Material 9 (symbolisiert über das gefüllte Quadrat) weist gegenüber Vergleichsmaterial 8 (symbolisiert über das gefüllte Dreieck) bessere Eigenschaften auf.

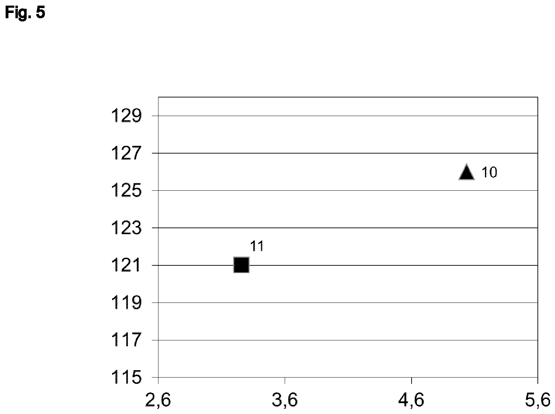

- Fig. 5: zeigt die Ergebnisse der Cone Kalorimertermessungen der Mischungen 10 und 11 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, Journal of Fire Science, 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Material 11 (symbolisiert über das gefüllte Quadrat) weist gegenüber Vergleichsmaterial 10 (symbolisiert über das gefüllte Dreieck) bessere Eigenschaften auf.

## Patentansprüche

1. Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polycarbonatdiol basierendes thermoplastisches Polyurethan ist,
wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole.

2. Zusammensetzung gemäß Anspruch 1, wobei die Zusammensetzung mindestens ein Schichtsilikat oder Hydrotalkit oder Mischungen davon enthält.

3. Zusammensetzung gemäß Anspruch 2, wobei das Schichtsilikat ein organisch interkaliertes Schichtsilikat ist und/oder der Hydrotalkit ein organisch interkalierter Hydrotalkit ist.

4. Zusammensetzung gemäß einem der Ansprüche 2 oder 3, wobei das Schichtsilikat Bentonit ist.

5. Zusammensetzung gemäß einem der Ansprüche 2 bis 4, wobei das mindestens eine Schichtsilikat oder Hydrotalkit oder die Mischung davon in einer Menge im Bereich von 0,5 Gew.-% bis 20 Gew.-%, bezogen auf die gesamte Zusammensetzung, enthalten ist.

6. Zusammensetzung gemäß einem der Ansprüche 2 bis 5, wobei der Anteil der Summe der Gewichts-Anteile des mindestens einen Metallhydroxids, des mindestens einen phosphorhaltigen Flammschutzmittels und des mindestens einen Schichtsilikats oder Hydrotalkits oder Mischungen davon im Bereich von 10 bis 80 %, bezogen auf die gesamte Zusammensetzung, liegt.

7. Zusammensetzung gemäß einem der Ansprüche 1 bis 6, wobei das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.

8. Zusammensetzung gemäß einem der Ansprüche 1 bis 7, wobei das Metallhydroxid Aluminiumhydroxid ist.

9. Zusammensetzung gemäß einem der Ansprüche 1 bis 8, wobei das Metallhydroxid zumindest teilweise von einer Hülle umgeben ist.

10. Zusammensetzung gemäß einem der Ansprüche 1 bis 9, wobei das phosphorhaltige Flammschutzmittel ausgewählt ist aus der Gruppe bestehend aus Derivaten der Phosphorsäure, Derivaten der Phosphonsäure, Derivaten der Phosphinsäure und einer Mischung aus zwei oder mehr dieser Derivate.

11. Zusammensetzung gemäß einem der Ansprüche 1 bis 10, wobei das phosphorhaltige Flammschutzmittel ausgewählt ist aus der Gruppe bestehend aus Resorcinol bis-diphenylphosphat (RDP), Bisphenol-A bis-(diphenylphosphat) (BDP), und Diphenylkresylphosphat (DPK).

12. Zusammensetzung gemäß einem der Ansprüche 1 bis 11, wobei der Anteil des Metallhydroxids in der Zusammensetzung im Bereich von 10 bis 65 % bezogen auf die gesamte Zusammensetzung, liegt.

13. Zusammensetzung gemäß einem der Ansprüche 1 bis 12, wobei der Anteil des phosphorhaltigen Flammschutzmittels im Bereich von 3 bis 30 % bezogen auf die gesamte Zusammensetzung, liegt.

14. Zusammensetzung gemäß einem der Ansprüche 1 bis 13, wobei der Anteil des Metallhydroxids in der Zusammensetzung im Bereich von 10 bis 65 % bezogen auf die gesamte Zusammensetzung, liegt und der Anteil des phosphorhaltigen Flammschutzmittels im Bereich von 3 bis 30 % bezogen auf die gesamte Zusammensetzung, liegt.

15. Verwendung einer Zusammensetzung gemäß einem der Ansprüche 1 bis 14 zur Herstellung von Kabelummantelungen.

## Claims

1. A composition comprising at least one thermoplastic polyurethane, at least one metal hydroxide, and at least one phosphorus-containing flame retardant, where the thermoplastic polyurethane is a thermoplastic polyurethane based on at least one diisocyanate and on at least one polycarbonatediol, where the at least one polycarbonatediol is one selected from the group consisting of polycarbonatediols based on butanediol and hexanediol, polycarbonatediols based on pentanediol and hexanediol, polycarbonatediols based on hexanediol, and mixtures of two or more of said polycarbonatediols.

2. The composition according to claim 1, where the composition comprises at least one phyllosilicate, or hydrotalcite, or a mixture thereof.

3. The composition according to claim 2, where the phyllosilicate is an organically intercalated phyllosilicate and/or the hydrotalcite is an organically intercalated hydrotalcite.

4. The composition according to claim 2 or 3, where the phyllosilicate is bentonite.

5. The composition according to any of claims 2 to 4, where the amount comprised of the at least one phyllosilicate, or hydrotalcite, or the mixture thereof, is in the range from 0.5% by weight to 20% by weight, based on the entire composition.

6. The composition according to any of claims 2 to 5, where the proportion of the total of the proportions by weight of the at least one metal hydroxide, of the at least one phosphorus-containing flame retardant, and of the at least one phyllosilicate, or hydrotalcite, or mixture thereof, is in the range from 10 to 80%, based on the entire composition.

7. The composition according to any of claims 1 to 6, where the metal hydroxide is one selected from the group consisting of aluminum hydroxides, aluminum oxide hydroxides, magnesium hydroxide, and mixtures of two or more of said hydroxides.

8. The composition according to any of claims 1 to 7, where the metal hydroxide is aluminum hydroxide.

9. The composition according to any of claims 1 to 8, where a coating at least to some extent surrounds the metal hydroxide.

10. The composition according to any of claims 1 to 9, where the phosphorus-containing flame retardant is one selected from the group consisting of derivatives of phosphoric acid, derivatives of phosphonic acid, derivatives of phosphinic acid, and mixtures of two or more of said derivatives.

11. The composition according to any of claims 1 to 10, where the phosphorus-containing flame retardant is one selected from the group consisting of resorcinol bis(diphenyl phosphate) (RDP), bisphenol A bis(diphenyl phosphate) (BDP), and diphenyl cresyl phosphate (DPC).

12. The composition according to any of claims 1 to 11, where the proportion of the metal hydroxide in the composition is in the range from 10 to 65%, based on the entire composition.

13. The composition according to any of claims 1 to 12, where the proportion of the phosphorus-containing flame retardant is in the range from 3 to 30%, based on the entire composition.

14. The composition according to any of claims 1 to 13, where the proportion of metal hydroxide in the composition is in the range from 10 to 65%, based on the entire composition, and the proportion of the phosphorus-containing flame retardant is in the range from 3 to 30%, based on the entire composition.

15. The use of a composition according to any of claims 1 to 14, for producing cable sheathing.

## Revendications

1. Composition contenant au moins un polyuréthane thermoplastique, au moins un hydroxyde métallique et au moins un agent ignifugé contenant du phosphore, le polyuréthane thermoplastique étant un polyuréthane thermoplastique à base d'au moins un diisocyanate et d'au moins un polycarbonate-diol, ledit au moins un polycarbonate-diol étant choisi dans le groupe constitué par les polycarbonate-diols à base de butanediol et d'hexane-diol, les polycarbonate-diols à base de pentane-diol et d'hexane-diol, les polycarbonatediols à base d'hexane-diol, et les mélanges de deux ou plus de ces polycarbonate-diols.

2. Composition selon la revendication 1, dans laquelle la composition contient au moins un phyllosilicate ou un hydrotalcite ou leurs mélanges.

3. Composition selon la revendication 2, dans laquelle le phyllosilicate est un phyllosilicate à intercalage organique et/ou l'hydrotalcite est un hydrotalcite à intercalage organique.

4. Composition selon l'une quelconque des revendications 2 ou 3, dans laquelle le phyllosilicate est la bentonite.

5. Composition selon l'une quelconque des revendications 2 à 4, dans laquelle ledit au moins un phyllosilicate ou hydrotalcite ou leur mélange est contenu en une quantité dans la plage allant de 0,5 % en poids à 20 % en poids, par rapport à l'ensemble de la composition.

6. Composition selon l'une quelconque des revendications 2 à 5, dans laquelle la proportion de la somme des proportions en poids dudit au moins un hydroxyde métallique, dudit au moins un agent ignifuge contenant du phosphore et dudit au moins un phyllosilicate ou hydrotalcite ou leur mélange, se situe dans la plage allant de 10 à 80 %, par rapport à l'ensemble de la composition.

7. Composition selon l'une quelconque des revendications 1 à 6, dans laquelle l'hydroxyde métallique est choisi dans le groupe constitué par les hydroxydes d'aluminium, les oxyhydroxydes d'aluminium, l'hydroxyde de magnésium ou un mélange de deux ou plus de ces hydroxydes.

8. Composition selon l'une quelconque des revendications 1 à 7, dans laquelle l'hydroxyde métallique est l'hydroxyde d'aluminium.

9. Composition selon l'une quelconque des revendications 1 à 8, dans laquelle l'hydroxyde métallique est entouré au moins partiellement par une enveloppe.

10. Composition selon l'une quelconque des revendications 1 à 9, dans laquelle l'agent ignifuge contenant du phosphore est choisi dans le groupe constitué par les dérivés de l'acide phosphorique, les dérivés de l'acide phosphonique, les dérivés de l'acide phosphinique et un mélange de deux ou plus de ces dérivés.

11. Composition selon l'une quelconque des revendications 1 à 10, dans laquelle l'agent ignifuge contenant du phosphore est choisi dans le groupe constitué par le bisdiphénylphosphate de résorcinol (RDP), le bis-(diphénylphosphate) de bisphénol A (BDP) et le phosphate de diphénylcrésyle (DPK).

12. Composition selon l'une quelconque des revendications 1 à 11, dans laquelle la proportion de l'hydroxyde métallique dans la composition se situe dans la plage allant de 10 à 65 %, par rapport à l'ensemble de la composition.

13. Composition selon l'une quelconque des revendications 1 à 12, dans laquelle la proportion de l'agent ignifuge contenant du phosphore se situe dans la plage allant de 3 à 30 %, par rapport à l'ensemble de la composition.

14. Composition selon l'une quelconque des revendications 1 à 13, dans laquelle la proportion de l'hydroxyde métallique dans la composition se situe dans la plage allant de 10 à 65 %, par rapport à l'ensemble de la composition, et la proportion de l'agent ignifuge contenant du phosphore se situe dans la plage allant de 3 à 30 %, par rapport à l'ensemble de la composition.

15. Utilisation d'une composition selon l'une quelconque des revendications 1 à 14 pour la fabrication d'enrobages de câbles.
